# EUROPÄISCHE PATENTSCHRIFT

(11) **EP 3 283 341 B1**
(45) Veröffentlichungstag und Bekanntmachung des Hinweises auf die Patenterteilung: **03.03.2021**
(21) Anmeldenummer: 16716574.5
(22) Anmeldetag: 15.04.2016
(51) Int. Cl.: B60T 17/18, B60T 17/22, F16D 66/00

(54) **VERFAHREN UND STEUERGERÄT ZUM VERMEIDEN VON ÜBERHITZEN EINER BREMSE EINES FAHRZEUGS**
METHOD AND CONTROL DEVIVE FOR AVOIDING OVERHEATING OF A VEHICLE BRAKE
PROCEDE ET APPAREIL POUR ÉVITER SURCHAUFFAGE D'UN FREIN D'UN VÉHICULE

(30) Priorität: 17.04.2015 DE 102015105862
(43) Veröffentlichungstag der Anmeldung: 21.02.2018
(73) Patentinhaber: KNORR-BREMSE Systeme für Nutzfahrzeuge GmbH, 80809 München (DE)
(72) Erfinder: HECKER, Falk, 71706 Markgröningen (DE); KOCH, Werner, 73326 Deggingen (DE); MAYR, Mathias, 82110 Germering (DE); THEIL, Robert, 82299 Türkenfeld (DE); WERTH, Alexander, 80999 München (DE)
(86) Internationale Anmeldenummer: PCT/EP2016/058335
(87) Internationale Veröffentlichungsnummer: WO 2016/166277

(56) Entgegenhaltungen:
- EP-A1- 2 149 721
- WO-A1-2012/045953
- CN-Y- 2 475 637
- DE-A1- 4 431 045
- DE-A1- 10 243 127
- US-A1- 2002 104 717
- US-A1- 2011 054 758

## Beschreibung

Die Erfindung betrifft ein Verfahren zum Vermeiden von Überhitzen einer Bremse eines Fahrzeugs nach dem Oberbegriff des Anspruchs 1. Die Erfindung bezieht sich auch auf ein entsprechendes Steuergerät.

Betriebsbedingt unterliegt eine Reihe, insbesondere sicherheitsrelevanter, Funktionsteile von Bremsen einer thermischen Belastung, die sich aus der reibenden Anlage von Bremsbelägen an einer Bremsscheibe ergeben. Dies kann u.a. auch aus den üblicherweise im Fahrbetrieb auftretenden Temperaturwechseln bewirkt werden.

Diese thermischen Belastungen können zu mechanischen und/oder chemischen Veränderungen der Materialien der Funktionsteile führen, wobei beispielsweise ein sogenanntes Verglasen der Reibbeläge von Bremsbelägen zu einem Reibwertverlust an deren Reibfläche führen.

Eine thermische Überlastung der beteiligten Funktionsteile kann sich auch aus einem sogenannten Heißlaufen ergeben. Dabei findet kein bewusstes Bremsen statt, sondern das Heißlaufen erfolgt durch ein leichtes Anlegen der Bremsbeläge, was dauerhaft zu thermischen Schädigungen der Bremsbeläge und der mechanischen Teile der Scheibenbremse, wie Führungen, Dichtungen oder dergleichen, führen kann.

Als kritisch im Sinne einer thermischen Überlastung ist auch eine dauerhafte Benutzung der Bremse bei Bergabfahrten zu sehen, die ebenso zu einer Schädigung der beteiligten Bauteile führen kann wie ein leichter Festsitz der Betätigungsorgane, beispielsweise einer Zuspanneinrichtung, wodurch ein unerwünschtes Restschleifmoment erzeugt wird, mit der Folge einer zu hohen Dauertemperatur.

Zur Ermittlung der Temperatur im Bereich der Scheibenbremse wird beispielsweise in der DE 102 43 127 A1 vorgeschlagen, einen induktiven Signalgeber als Multifunktionselement einzusetzen, mit dem u.a. temperaturabhängige Signale erzeugt werden, die in einer Auswerteeinrichtung mit einem Sollwert verglichen werden, bei dessen Überschreiten ein beispielsweise akustisches Signal gegeben wird.

Das Dokument DE 44 31 045 C2 beschreibt eine Sensoranordnung zur gemeinsamen Messung zweier Größen, z.B. die Drehzahl eines eine Bremse aufweisenden Rades eines Kraftfahrzeuges und der Temperatur der Bremse mittels eines induktiven Sensors.

Als Konsequenz daraus werden bislang die beteiligten Bauteile unmittelbar ersetzt, wozu zumindest ein Stillstand des Fahrzeuges erforderlich ist, was naturgemäß mit erheblichen Kosten verbunden ist, insbesondere resultierend aus den Stillstandszeiten des Fahrzeuges sowie gegebenenfalls aus der Ersatzteilbeschaffung und den Montage- bzw. Demontagearbeiten.

Der Erfindung liegt die Aufgabe zugrunde, ein Verfahren zu entwickeln, dass die Standzeit der Scheibenbremse erhöht und deren Funktionssicherheit optimiert wird.

Diese Aufgabe wird durch die Merkmale der unabhängigen Ansprüche gelöst.

Ein erfindungsgemäßes Verfahren zum Vermeiden von Überhitzen einer Bremse eines Fahrzeugs, insbesondere eines Nutzfahrzeugs, und/oder eines Anhängers, weist die folgenden Schritte auf:
Einlesen eines ersten Temperatursignals und zumindest eines zweiten Temperatursignals, wobei das erste Temperatursignal eine Temperatur der Bremse und/oder eines Funktionsteils der Bremse repräsentiert und wobei das zumindest zweite Temperatursignal zumindest eine weitere Temperatur zumindest einer weiteren Bremse des Fahrzeugs repräsentiert; und
Ermitteln eines Fehlerzustands der Bremse unter Verwendung des ersten Temperatursignals und des zweiten Temperatursignals, um ein Überhitzen der Bremse zu vermeiden.

Das erfindungsgemäße Verfahren stellt sich sozusagen als Thermomanagement dar, das nicht nur die betriebsbedingten Temperaturen mittels Sensoren erfasst, die betriebsbedingten Temperaturen als ein die Temperatur repräsentierendes Temperatursignal bereitstellt und auswertet, sondern im Bedarfsfall die Funktionsteile, soweit dies möglich ist, nachregelt. So wird unter Verwendung des Temperatursignals ein Regelsignal bereitgestellt, welches eines Führungsgröße für zumindest ein Funktionsteil darstellt. Dabei erfolgt die Nachregelung rechnergesteuert. Das Verfahren kann an einer Bremse oder in einem Bremssystem ausgeführt werden. Dabei kann es sich bei der Bremse beispielsweise um eine Scheibenbremse oder eine Trommelbremse handeln.

D.h., im Gegensatz zum Stand der Technik, bei dem lediglich die Möglichkeit besteht, nach einer Erfassung der Temperaturen und deren Sollwertüberschreitung ein Signal zu aktivieren, um die betreffenden Funktionsteile direkt auszutauschen, wird durch die Erfindung erreicht, diese Funktionsteile in einen neuen betriebssicheren Zustand zu führen, ohne dass entsprechende Bauteil sofort auszutauschen. Dadurch wird vorteilhaft die Wirtschaftlichkeit erhöht, da Standzeiten der Radbremsen beziehungsweise der betreffenden Funktionsteile erhöht werden.

In einer Ausführung kann die Bremse auf einer Achse angeordnet sein und die weitere Bremse kann auf der gleichen Achse oder auf einer weiteren Achse angeordnet sein. Damit ist es vorteilhaft möglich, unterschiedliche Bremsen zur Untersuchung heranzuziehen.

Es ist in einer weiteren Ausführung vorgesehen, dass im Schritt des Ermittelns eine Temperaturdifferenz als eine Differenz zwischen dem Temperatursignal und dem weiteren Temperatursignal ermittelt wird, und der Fehlerzustand ermittelt wird, wenn die Temperaturdifferenz einen Differenz-Schwellwert überschreitet. Der Differenz-Schwellwert kann zuvor festgelegt werden, z.B. anhand von vorher ausgeführten Messreihen.

Eine weitere Ausführung sieht vor, im Schritt des Einlesens ein zusätzliches Temperatursignal einzulesen, das eine zusätzliche Temperatur einer zusätzlichen Bremse und/oder eines Funktionsteils der zusätzlichen Bremse repräsentiert, und im Schritt des Ermittelns den Fehlerzustand unter Verwendung des zusätzlichen Temperatursignals zu ermitteln. Damit kann eine Genauigkeit erhöht werden.

In einer noch weiteren Ausführung kann im Schritt des Ermittelns die Temperaturdifferenz als Differenz zwischen dem Temperatursignal oder der Temperatur und einem Mittelwert der Temperatursignale oder der durch die Temperatursignale repräsentierten Temperaturen ermittelt werden, insbesondere wobei der Mittelwert als Median, getrimmter Mittelwert, arithmetisches Mittel und/oder Erwartungswert definiert ist. Dies ist vorteilhaft, da so eine Zuverlässigkeit erhöht werden kann.

Dabei kann in einer noch weiteren Ausführung die Signalweitergabe drahtlos erfolgen. Das bedeutet, dass eine Signalübertragung vom Sensor zur Auswerteeinrichtung und von dort ggf. zu einem Aktuator drahtlos, also über Funk oder dergleichen, erfolgt, wobei die Regelung der Funktionsteile unter Berücksichtigung des Zustands der Scheibenbremse erfolgt.

Die Temperaturmessung kann an unterschiedlichen Funktionsteilen direkt oder indirekt erfolgen. So kann das zumindest eine Temperatur zumindest eines Funktionsteils repräsentierende Temperatursignal von einem Temperatursensor, wie beispielsweise einem Thermoelement, einem Widerstandsthermometer oder einem berührungslos messenden Thermometer, wie beispielsweise ein Strahlungsthermometer, bereitgestellt oder von einem anderen Sensorsignal abgeleitet werden. Ein entsprechender Sensor kann beispielsweise an einem Polrad, an der Bremsscheibe der Scheibenbremse, an einem oder beiden Bremsbelägen oder an einem Bremssattelteil, ebenso an elektronischen Bauteilen nach Art von separaten oder integrierten Thermoelementen, wie sie für eine Temperaturkompensation Verwendung finden, angeordnet werden. In diesem Fall erfolgt die Temperaturmessung an Belag-Verschleißsensoren, die in den Bremsbelägen integriert sind.

In einer Ausführung kann die Temperaturmessung unter Verwendung eines Polrads und/oder eines ABS-Sensors erfolgen. Damit kann vorteilhaft ein Sensor für zwei Funktionen verwendet werden. So kann eine Signalamplitude des Polradsensors eine Temperatur eines Funktionsteils repräsentieren, wobei die Frequenz der Drehzahl und die Amplitude der Temperatur entsprechen. Hierbei ist jedoch zu berücksichtigen, dass bei Anbindung des Polrades an der Bremsscheibe deren Bauart, je nachdem, ob beispielsweise eine Topfscheibe oder Halsscheibe Verwendung findet, und die Position des Polrads, einen Einfluss auf den zeitlichen Verlauf des Temperatursignals und die Höhe der Temperatur nimmt. Das Verfahren kann diese Unterschiede durch eine Plausibilisierung der Daten mit einem elektronischen Bremssystem (EBS) erkennen, wobei Bremsdruck, Bremsdauer und Geschwindigkeit zur Bestimmung der umgesetzten Bremsenergie genutzt werden.

Als berührungslose Temperatursensoren können Strahlungspyrometer zum Einsatz kommen, wobei im Fall einer Scheibenbremse bevorzugt auf beiden Seiten der Bremsscheibe jeweils ein Strahlungspyrometer vorgesehen ist.

Als Strahlungspyrometer kann ein Infrarotthermometer in Form beispielsweise eines Schmalbandpyrometers, mit Germanium-Photodiode oder Indium-Gallium-Arsenid-Photodiode oder Bandstrahlungspyrometer Verwendung finden, ebenso wie ein Quotienten-Pyrometer.

Thermisch beeinträchtigte Zustände der Bremse, wie z.B. einer Scheibenbremse, ergeben sich beispielsweise aus verglasenden Bremsbelägen, die sich durch zu geringen Anpressdruck und zu geringe Temperatur an den Bremsbelägen ergeben, wobei es zu einem Verlust des Reibwertes der Bremsbeläge kommt. Dies kann sich z.B. durch den überwiegenden Einsatz von Dauerbremsanlagen, wie z.B. Retardern und anderen sekundären Zusatzbremssystemen mit Bremsenergierückgewinnung, wie beispielsweise in Hybridfahrzeugen eingesetzt, ergeben. Hier wird beim Bremsvorgang lediglich ein geringer Bremsdruck eingebracht und es werden nur geringe Temperaturen erreicht.

Im Fall der Erkennung von zu geringem Bremsdruck und einer zu geringen Temperatur an der Bremse bzw. den benachbarten Bauteilen, wie einer zugeordneten Achse, kann ein Lastausgleich zwischen einer Mehrzahl von Bremsen angefordert oder initiiert werden. So kann im Fall der Erkennung von zu geringem Bremsdruck und einer zu geringen Temperatur an der Bremse bzw. den benachbarten Bauteilen, wie einer zugeordneten Achse, von einem Steuergerät (ECU) eine Anforderung an eine Regeleinrichtung geschickt werden, so dass im Fall des Vorliegens von verglasten Belägen unterstützende Bremsen abgeschaltet werden, um die Bremskraft und in der Folge die Temperatur an der Bremse mit verglasenden Belägen zu erhöhen. Unterstützende Bremsen können Retarder sein oder an der Achse oder dem Rad angebrachte rekuperative Bremsen. D.h., fallweise kommen die Betriebsbremsen vor einer Motorbremse und/oder den Retardern oder rekuperativen Bremsen zum Einsatz. So kann eine größere Bremskraft auf die verglasenden Bremsbeläge ausgeübt werden ohne eine Gesamtverzögerung des Fahrzeugs zu erhöhen, wobei die dadurch erhöhte Bremskraft auf die verglasenden Bremsbeläge dem Zustand des Verglasens entgegengewirkt und der Reibwert der Bremsbeläge wieder erhöht wird.

Dadurch wird die Grundtemperatur der Bremse wie z.B. einer Scheibenbremse auf einem definiert erhöhten Niveau gehalten, sodass der genannte Kaltverschleiß bzw. das Verglasen der Bremsbeläge vermieden wird. Daraus ergibt sich eine deutliche Verbesserung der Wirtschaftlichkeit. Dies gilt gleichermaßen für die Möglichkeit des Fahrzeugführers anhand einer Anzeige die übertragenen Signale bei Überschreiten einer Soll-Temperatur aller Scheibenbremsen zu erkennen und danach zu reagieren, um so eine entsprechende Dauerbelastung der Scheibenbremsen zu vermeiden.

Eine geringfügig konstante Erhöhung der Temperatur bei drehendem Rad an den Bremsbelägen kann auf einen vorübergehenden Fehlzustand der mechanischen Bremse, z.B. der Führung des Bremsbelages oder der Bremssattel-Führung hinweisen.

Wird dieser Zustand erkannt, kann einmalig ein höherer Bremsdruck bei der nächsten Bremsung auf die Scheibenbremse aufgebracht werden, um ein Lösen der klemmenden Führung zu erreichen. Alternativ kann bei einem stehenden Fahrzeug die Bremse betätigt werden, um ein Lösen einer klemmenden Führung zu erreichen. Falls dies zu keiner Verbesserung der Fehlfunktion führt, kann die Bremsanforderung auf die Scheibenbremse reduziert und ein optischer und/oder akustischer Warnhinweis ausgelöst werden.

Ein Heißlaufen der Bremse kann aufgrund einer Fehlfunktion eintreten, die sich aus einem nicht mehr ausreichenden Lüftspiel für die Freigängigkeit der Bremsscheibe und eines sich einstellenden Restbremsmoments ergibt. In einem solchen Zustand einer Bremse auftretende Wärme kann zu einem selbstverstärkenden Effekt führen.

Dieses Restbremsmoment, verursacht durch eine thermische Ausdehnung der Bremsscheibe und/oder Bremsbeläge, kann durch ein aktives Wegführen der Bremsbeläge von der Bremsscheibe (Lüftspielvergrößerung), z.B. mithilfe eines bidirektionalen Nachstellers, kompensiert werden. Mit Hilfe der Erfindung kann diese aktiv gesteuerte Lüftspielvergrößerung initiiert werden. So kann durch eine einmalige große Bremsanforderung und/oder durch Reduzierung der Bremsanforderung die Bremse wieder in einen funktionstüchtigen Zustand versetzt werden, bzw. ein unerwünschtes Fehlverhalten vermieden werden.

Wie bereits zum Stand der Technik erwähnt, kann es durch lang anhaltende Bergabfahrten zu einer dauerhaft erhöhten Temperatur der Scheibenbremse kommen, aus der sich ein unzulässiger Betriebszustand ergibt.

Mithilfe der Erfindung besteht hier bei lang anhaltenden hohen Temperaturen während einer Bremsung die Möglichkeit, die Bremsanforderung zwischen den den jeweiligen Rädern zugeordneten Bremsen, bzw. Scheibenbremsen so zu verteilen, dass nicht eine Bremse oder die Bremsen einer Achse mit einer erhöhten Temperatur belastet werden, sondern alle Bremsen derart, dass die Temperatur an der heißesten Scheibenbremse reduziert wird. Hierbei wird die Bremsanforderung auf diese Bremse reduziert und die auf die anderen erhöht, bei gleicher oder sogar gesteigerter Fahrzeug-Verzögerung.

Eine Optimierung des thermischen Bremsenzustands kann dadurch erreicht werden, dass die Verteilung der Bremsenanforderung nur in einem fahrstabilen Bereich erfolgt, d.h. im niedrigen Bremsdruck- und Verzögerungsbereich. Dabei kann ein Ausgleich der Bremsleistung zwischen einer Mehrzahl von Bremsen einer Achse erfolgen. Dabei kann ein Ausgleich der Bremsleistung zwischen Bremsen einer Mehrzahl von Achsen erfolgen. Um die Performance bei Notbremsung und Vollbremsung zu erhalten, kann die Bremsanforderungsverteilung auf den fahrstabilen Bereich beschränkt eingesetzt werden. Der fahrstabile Bereich kann im niedrigen Bremsdruck- und Verzögerungsbereich angeordnet sein. So kann ein Optimieren der Wirksamkeit der Bremse in Abhängigkeit des thermischen Betriebszustands erzielt werden.

Wird durch die Auswerteeinheit eine Abnahme der Reibarbeit einer Bremse, z.B. durch verringerte Temperatur-Emission oder einen verringerten Emissionswert und damit einen verringerten Reibwert der Reibpaarung, erkannt, so kann eine sogenannte Putzbremsung initiiert werden. Der beschriebene Zustand kann durch eine vorangegangene hohe thermische Belastung z.B. bei einer Scheibenbremse verursacht sein, insbesondere mit Materialübertrag auf die Bremsscheibe oder durch eine über einen längeren Zeitraum wenig benutzte Bremse, was auch als "einschlafende" Beläge bekannt ist.

Für eine Putzbremsung kann vorteilhaft bei einer Anpassungsbremsung kleiner 0,3g die Bremsung ungleichmäßig, d.h. innerhalb fahrstabiler Parameter, auf die Bremsen verteilt werden, sodass die thermisch beeinträchtigte Bremse eine Bremsdruckanforderung enthält, die ein Putzen der Bremsbelag-Oberfläche bewirkt. Nicht thermisch beanspruchte Bremsen erhalten eine um dieses Maß reduzierte Bremsanforderung.

Dazu ist in einer weiteren Ausführung vorgesehen, dass bei Ermittlung einer in einem Toleranzbereich konstanten Erhöhung der Temperatur an Bremsbelägen der Bremse, insbesondere bei drehendem Rad, einmalig bei einer nachfolgenden betriebsbedingten Bremsung diese mit einem höheren Bremsdruck erfolgt, insbesondere bei gleichbleibender Bremsleistung des Fahrzeugs und/oder die Bremse bei stehendem Fahrzeug zumindest einmal betätigt wird.

Bei Bremsanforderungen für einen Nothalt, d.h. größer 0,3g, oder ABS-RegelFall wird keine Verteilung der Bremsanforderung durchgeführt. Der Ausgleich der Bremsanforderung kann im Übrigen auch diagonal erfolgen, d.h. beispielsweise vorne rechts und hinten links. So kann vorteilhaft ein fahrstabiler Zustand eingehalten werden.

Die Höhe der Temperatur und der zeitliche Verlauf der Temperaturerhöhung und Temperaturabkühlung nach einer erfolgten Bremsung kann sich zwischen zwei Fahrzeugen aufgrund verschiedenster Fahrzeug-Konfigurationen und Radhausgestaltungen, beispielsweise bei Bussen und Lkws, unterscheiden. Dies kann in einem Ersatzmodell abgebildet werden. Um hier entsprechende Parameter zu erhalten, kann nach Aufbringen des Bremsdrucks überprüft werden, innerhalb welcher Zeit sich welche Temperatur einstellt.

Dabei kann durch Vergleich mit anderen Rädern beziehungsweise Bremsen des Fahrzeugs eine Überprüfung des abgegebenen Signals durchgeführt werden. Das Ersatzmodell kann die Wärmeleitung bzw. den Wärmeübergang und ergänzend oder alternativ die Wärmekapazität und Kühlung der Bremse, der angrenzenden Bauteile sowie ergänzend oder alternativ der Umgebung abbilden.

Ein erfindungsgemäßes Steuergerät zur Ausführung des Verfahrens zum Vermeiden von Überhitzen einer Bremse eines Fahrzeugs, insbesondere eines Nutzfahrzeugs und/oder eines Anhängers, weist folgenden Einrichtungen auf: Schnittstelle zum Einlesen eines ersten Temperatursignals und zumindest eines zweiten Temperatursignals, wobei das erste Temperatursignal eine Temperatur der Bremse und/oder eines Funktionsteils der Bremse repräsentiert und wobei das zumindest zweite Temperatursignal zumindest eine weitere Temperatur zumindest einer weiteren Bremse des Fahrzeugs repräsentiert; und Einrichtung zum Ermitteln eines Fehlerzustands der Bremse unter Verwendung des ersten Temperatursignals und des zweiten Temperatursignals, um ein Überhitzen der Bremse zu vermeiden.

Das Steuergerät kann so ausgebildet sein, um die Schritte einer Variante eines hier vorgestellten Verfahrens in entsprechenden Einrichtungen durchzuführen bzw. umzusetzen. Unter einem Steuergerät kann ein elektrisches Gerät oder eine elektrische Schaltung, beispielsweise eine integrierte Schaltung, verstanden werden. Unter einem Steuergerät kann auch eine Regeleinrichtung, eine ECU oder eine Steuereinrichtung verstanden werden. Das Steuergerät kann ein Teil eines elektronischen Bremssystems sein. Das Steuergerät kann ausgebildet sein, um über geeignete Schnittstellen Signale zu empfangen und auszugeben. Auch die der Erfindung zugrunde liegende Idee kann durch das Steuergerät effizient umgesetzt werden.

Unter einem Steuergerät kann vorliegend ein elektrisches Gerät verstanden werden, das Sensorsignale verarbeitet und in Abhängigkeit der Sensorsignale Steuer- und/oder Datensignale ausgibt. Die Schnittstellen der Steuereinrichtung können hard- und/oder softwaremäßig ausgebildet sein. Bei einer hardwaremäßigen Ausbildung können die Schnittstellen beispielsweise Teil eines sogenannten System-ASICs sein, der verschiedenste Funktionen der Steuereinrichtung beinhaltet. Die Schnittstellen können jedoch auch als eigene, integrierte Schaltkreise ausgebildet sein oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Eine Bremse für ein Fahrzeug, insbesondere ein Nutzfahrzeug und/oder einen Anhänger, die ist ausgebildet, ein Temperatursignal bereitzustellen zum Vermeiden von Überhitzen der Bremse.

Ein Bremssystem für ein Fahrzeug, insbesondere ein Nutzfahrzeug und/oder ein Anhänger, umfasst das oben beschriebene Steuergerät, eine erste oben beschriebene Bremse angeordnet auf einer Achse und eine zweite oben beschriebene Bremse, die auf der gleichen Achse und/oder auf einer weiteren Achse angeordnet ist.

Ein Fahrzeug, insbesondere ein Nutzfahrzeug und/oder ein Anhänger weist das oben beschriebene Bremssystem auf.

Von Vorteil ist auch ein Computerprogrammprodukt mit Programmcode, der auf einem maschinenlesbaren Träger wie einem Halbleiterspeicher gespeichert sein kann und zur Durchführung des Verfahrens nach einer der vorstehend beschriebenen Ausführungsformen verwendet wird, wenn das Computerprogrammprodukt auf einer Steuereinrichtung oder dem oben beschriebenen Steuergerät ausgeführt wird.

Im Übrigen kann über ein Update einer Software für ein elektronisches Bremssystem (EBS) das erfindungsgemäße Verfahren so aktualisiert werden, dass neue Fehler-Zustände, wie sie im Feldbetrieb oder im Feldversuch ermittelt sind, hinterlegt werden.

Durch die Information der Temperatur und des Verschleißes können die Bremsen in der Art betrieben werden, dass die Bremsleistung einschließlich des Bremsverschleißes optimiert wird. Die Standzeiten, insbesondere der Bremsbeläge der einzelnen an einem Fahrzeug zum Einsatz kommenden Bremsen können somit angeglichen werden.

Bei einem Fehlerzustand und/oder bei Erkennung der konstant höheren Temperatur nach einer Bremsung, kann in einem Ausführungsbeispiel ein akustisches und ergänzend oder alternativ ein optisches Signal ausgegeben werden. Damit kann ein Fahrer frühzeitig auf den Fehlerzustand aufmerksam gemacht werden, wodurch sich ein Zeitabstand bis zur Fehlerbehebung verringern kann.

Als ein weiterer Vorteil ergibt sich in einer noch weiteren Ausführung, dass der ermittelte Fehlerzustand über ein Fahrtenbuch- oder Geolokalisationssystem an eine Werkstatt zur Bereitstellung eines Ersatzteils, oder Planung von einem Service-Intervall übermittelt werden kann. Mit anderen Worten, es kann eine vorausschauende Ersatzteillieferung über ein Fahrtenbuch- oder ein Geolokalisationssystem und eine Informationsweitergabe an Werkstätten über Telekommunikation ermöglicht werden. Dies betrifft insbesondere die Bereitstellung von Ersatzteilen, wie Bremsbelägen, Austauschbremsen sowie die Planung von Service-Intervallen, die über die thermische Erkennung des Zustandes der Scheibenbremse möglich ist.

Bevorzugte Ausführungsbeispiele der vorliegenden Erfindung werden nachfolgend Bezug nehmend auf die beiliegenden Zeichnungen näher erläutert.

### Es zeigen:

Fig. 1 eine schematische Blockdarstellung eines Fahrzeugs mit einem Bremssystem gemäß einem Ausführungsbeispiel der vorliegenden Erfindung; und
Fig. 2 ein Flussdiagramm eines Verfahrens gemäß einem Ausführungsbeispiel der vorliegenden Erfindung.

In der nachfolgenden Beschreibung der bevorzugten Ausführungsbeispiele der vorliegenden Erfindung werden für die in den verschiedenen Zeichnungen dargestellten und ähnlich wirkenden Elemente gleiche oder ähnliche Bezugszeichen verwendet, wobei eine wiederholte Beschreibung dieser Elemente weggelassen wird.

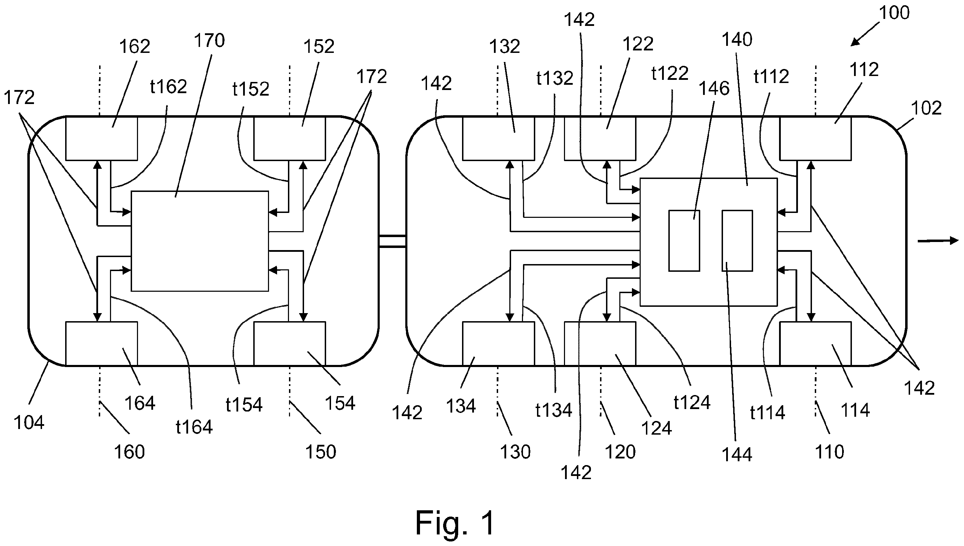

Fig. 1 zeigt eine schematische Blockdarstellung eines Fahrzeugs 100 mit einem Bremssystem gemäß einem Ausführungsbeispiel der vorliegenden Erfindung. Das Fahrzeug 100 umfasst in dem dargestellten Ausführungsbeispiel ein Nutzfahrzeug 102 sowie einen Anhänger 104. Eine Vorwärtsfahrtrichtung ist mit einem Pfeil angegeben.

Das Nutzfahrzeug 102 weist drei Achsen 110, 120, 130 mit jeweils zwei Bremsen 112, 114, 122, 124, 132, 134 auf, wobei jeweils eine Bremse 112, 122, 132 auf der in Fahrtrichtung des Nutzfahrzeugs 102 rechten Fahrzeugseite und eine Bremse 114, 124, 134 auf der linken Fahrzeugseite angeordnet ist. Weiterhin weist das Nutzfahrzeug 102 ein Steuergerät 140 auf. Die Bremsen sind ausgebildet, jeweils zumindest ein Temperatursignal t112, t114, t122, t124, t132, t134 bereitzustellen, welches über eine jeweilige Signalleitung dem Steuergerät 140 zugeführt und von dem Steuergerät 140 eingelesen wird. Das Steuergerät 140 ist ausgebildet, zumindest ein Bremsanforderungssignal 142 bereitzustellen. Das Bremsanforderungssignal 142 wird über eine jeweils zugehörige Signalleitung an eine jede Bremse 112, 114, 122, 124, 132, 134 übertragen. In einem bevorzugten Ausführungsbeispiel wird je Achse 110, 120, 130 ein Bremsanforderungssignal 142 bereitgestellt.

Der Anhänger 104 weist zwei Achsen 150, 160 mit jeweils zwei Bremsen 152, 154, 162, 164 auf, wobei jeweils eine Bremse 152, 162 auf der in Fahrtrichtung des Anhängers 104 rechten Fahrzeugseite und eine Bremse 154, 164 auf der linken Fahrzeugseite angeordnet ist. Weiterhin weist der Anhänger 104 ein Anhängersteuergerät 170 auf. Die Bremsen 152, 154, 162, 164 sind ausgebildet, jeweils zumindest ein Temperatursignal t152, t154, t162, t164 bereitzustellen, welches über eine jeweilige Signalleitung dem Anhängersteuergerät 170 zugeführt und von dem Anhängersteuergerät 170 eingelesen wird. Das Anhängersteuergerät 170 ist ausgebildet, zumindest ein Bremsanforderungssignal 172 bereitzustellen. Das Bremsanforderungssignal 172 wird über eine jeweils zugehörige Signalleitung an eine jede Bremse 152, 154, 162, 164 übertragen. In einem bevorzugten Ausführungsbeispiel wird je Achse 150, 160 ein Bremsanforderungssignal 172 bereitgestellt.

Das Steuergerät 140 zum Vermeiden von Überhitzen einer Bremse eines Fahrzeugs, insbesondere eines Nutzfahrzeugs und/oder eines Anhängers, umfasst eine Schnittstelle 144 zum Einlesen eines ersten Temperatursignals und zumindest eines zweiten Temperatursignals, wobei das erste Temperatursignal eine Temperatur der Bremse und/oder eines Funktionsteils der Bremse repräsentiert und wobei das zumindest zweite Temperatursignal zumindest eine weitere Temperatur zumindest einer weiteren Bremse des Fahrzeugs repräsentiert sowie eine Ermittlungseinrichtung 146 zum Ermitteln eines Fehlerzustands der Bremse unter Verwendung des ersten Temperatursignals und des zweiten Temperatursignals, um ein Überhitzen der Bremse zu vermeiden In dem in Fig. 1 dargestellten Ausführungsbeispiel ist die Schnittstelle 144 zum Einlesen ausgebildet, die Temperatursignale t112, t114, t122, t124, t132, t134 der Bremsen des Nutzfahrzeugs 102 einzulesen. Das Steuergerät 140 ist ausgebildet, einen Fehlerzustand einer Bremse zu erkennen, wenn die betreffende Temperatur dieser Bremse eine Temperaturabweichung größer einem Schwellwert von einem Mittelwert der Temperaturen aller Bremsen abweicht.

Das Anhängersteuergerät 170 des Anhängers 104 entspricht im Wesentlichen funktional dem Steuergerät 140 des Nutzfahrzeugs, mit dem Unterschied, dass die Temperatursignale t152, t154, t162, t164 der Bremsen 152, 154, 162, 164 des Anhängers 104 eingelesen und überwacht werden.

In einem nicht gezeigten Ausführungsbeispiel ist die Funktionalität des Anhängersteuergeräts 170 des Anhängers 104 in das Steuergerät 140 des Nutzfahrzeugs 102 integriert.

In einem nicht gezeigten Ausführungsbeispiel sind das Steuergerät 140 des Nutzfahrzeugs 102 und das Anhängersteuergerät 170 des Anhängers 104 miteinander gekoppelt. So kann bei Auftreten und Erkennen eines Fehlerzustands eine Bremsanforderung zwischen dem Anhänger 104 und dem Nutzfahrzeug 102 verteilt werden. In einem anderen Ausführungsbeispiel arbeiten die beiden Steuergeräte 140, 170 unabhängig voneinander. In einem weiteren Ausführungsbeispiel weist das Fahrzeug 100 ein Steuergerät 140 auf, welches eine Bremsanforderung bei einem erkannten Fehlerzustand auf die Achsen 110, 120, 130 des Nutzfahrzeugs 102 sowie die Achsen 150, 160 des Anhängers 104 verteilt.

Wenn ein Fehlerzustand, das heißt eine heißlaufende Bremse, erkannt wird, kann das Steuergerät 140 bei einer normalen Bremsanforderung die betreffende Bremse oder alternativ die Bremsen der betroffenen Achse mit einer heißlaufenden Bremse nicht berücksichtigen und die Bremsanforderung an die verbliebenen Bremsen verteilen. Erst wenn die geforderte Verzögerung einen Vergleichswert übersteigt, wird ungeachtet der heißlaufenden Bremse die Bremsanforderung an alle Bremsen geleitet, um eine maximale Verzögerung zu erzielen.

In einem Ausführungsbeispiel wird ein ABS-Sensor oder ein Polrad verwendet, um die Temperatur zu ermitteln. Beispielsweise wird, wie in der Offenlegungsschrift DE 102 43 127 A1 dargestellt ist, ein Polrad mit einem induktiven Sensor genutzt, wobei in einem Ausführungsbeispiel die Amplitude des Sensorsignals ausgewertet wird, um eine Temperatur zu bestimmen. In einem alternativen Ausführungsbeispiel wird eine Widerstandsänderung des betreffenden Sensors überwacht, um die Temperatur zu bestimmen. Hierzu wird auf das Dokument DE 44 31 045 C2 verwiesen. Alternativ kommen andere Messverfahren zum Bestimmen und Erfassen der Temperatur zum Einsatz.

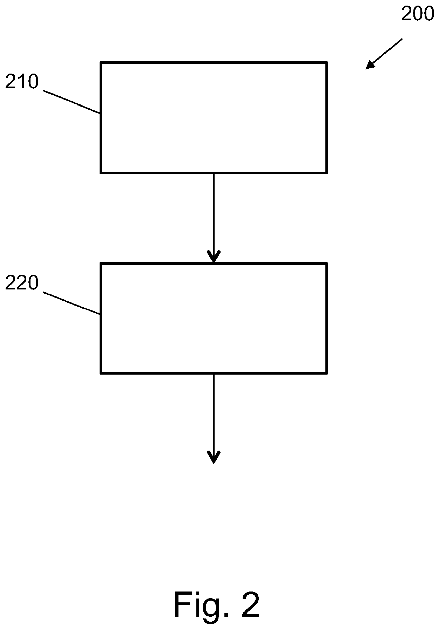

Fig. 2 zeigt ein Verfahren 200 gemäß einem Ausführungsbeispiel der vorliegenden Erfindung. Das Verfahren 200 zum Vermeiden von Überhitzen einer Bremse eines Fahrzeugs, insbesondere eines Nutzfahrzeugs und/oder eines Anhängers, umfasst einen Schritt 210 des Einlesens sowie einen Schritt 220 des Ermittelns. Bei dem Fahrzeug kann es sich um eine Variante eines in Fig. 1 gezeigten Ausführungsbeispiel eines Fahrzeugs 100 handeln.

Im Schritt 210 des Einlesens wird ein erstes Temperatursignal einer ersten Bremse der Bremsen 112, 114, 122, 124, 132, 134, 152, 154, 162, 164 des Fahrzeugs 100 und ein zweites Temperatursignal einer zweiten Bremse der Bremsen 112, 114, 122, 124, 132, 134, 152, 154, 162, 164 des Fahrzeugs 100 eingelesen. Im darauffolgenden Schritt 220 des Ermittelns wird unter Verwendung der Temperatursignale ein Fehlerzustand ermittelt. Ein Fehlerzustand wird ermittelt, wenn eine der Bremsen 112, 114, 122, 124, 132, 134, 152, 154, 162, 164 des Fahrzeugs 100 heiß läuft. Dies kann durch einen mechanischen Fehler, wie beispielsweise eine klemmende Führung, bedingt sein, sodass sich die betreffende Bremse nicht vollständig löst und somit auch im unbetätigten Zustand eine Bremswirkung aufweist, was zu einer Wärmeproduktion führt. Da die gemessene Temperatur von der betreffenden Bremse, der Einbauart, dem Einbauort des Temperatursensors und weiteren Faktoren abhängt, ist es schwer, den Fehlerzustand bei Erreichen einer absoluten Temperatur auszugeben. Für eine spezielle Fahrzeugkonfiguration kann auch die absolut gemessene Temperatur mit einem Schwellwert bzw. Vergleichs- oder Referenzwert verglichen werden, um einen Fehlerzustand zu erkennen.

In dem hier beschriebenen Verfahren wird eine Bremse identifiziert, wenn die Temperatur von dem Mittel aller Bremsen um mehr als einen definierten Toleranzbereich abweicht.

Um einem weiteren Erhitzen vorzubeugen, wird in einem Ausführungsbeispiel die betroffene Bremse bei Bremsvorgängen unterhalb einer definierten Bremsverzögerung nicht betätigt. Übersteigt die geforderte Verzögerung den definierten Verzögerungsschwellwert, beispielsweise bei einem Nothalt oder einer Vollbremsung, werden ungeachtet eines erkannten Fehlerzustands alle Bremsen betätigt.

Wenn ein Fehlerzustand erkannt wird, wird in einem Ausführungsbeispiel ein akustisches und ergänzend oder alternativ ein optisches Signal ausgegeben. Weiterhin wird in einem besonderen Ausführungsbeispiel der Fehlerzustand für Servicezwecke an eine Infrastruktureinrichtung übermittelt, beispielsweise für Wartungszwecke oder zur Ersatzteilbeschaffung. Dies kann parallel zur Übermittlung anderer Parameter eines elektronischen Fahrtenbuches erfolgen.

Bei einem erkannten Fehlerzustand kann ein weiterer Verfahrensschritt vorgesehen sein, um den Fehlerzustand zu beseitigen oder zu verringern. So kann bei einer folgenden betriebsbedingten Bremsanforderung die Bremsanforderung an die betroffene Bremse erhöht werden, um beispielsweise eine klemmende Führung wieder frei zu bekommen. Alternativ oder zusätzlich kann die betroffene Bremse bei einem Stillstand des Fahrzeugs 100 betätigt werden, insbesondere wiederholt betätigt werden, um ohne Bremsmoment eine Bewegung der beweglichen Teile der Bremse zu bewirken und somit wieder einen fehlerfreien Zustand der Bremse zu erreichen.

Die beschriebenen Ausführungsbeispiele sind nur beispielhaft gewählt und können miteinander kombiniert werden.

### Bezugszeichenliste

- 100: Fahrzeug
- 102: Nutzfahrzeug
- 104: Anhänger

- 110, 120, 130: Achse

- 112, 114: Bremse
- 122, 124: Bremse
- 132, 134: Bremse

- t112, t114: Temperatursignal
- t122, t124: Temperatursignal
- t132, t134: Temperatursignal

- 140: Steuergerät

- 142: Bremsanforderungssignal

- 144: Schnittstelle

- 146: Ermittlungseinrichtung

- 150, 160: Achse

- 152, 154: Bremse
- 162, 164: Bremse

- t152, t154: Temperatursignal
- t162, t164: Temperatursignal

- 170: Anhängersteuergerät

- 172: Bremsanforderungssignal

## Patentansprüche

1. Verfahren zum Vermeiden von Überhitzen einer Bremse eines Fahrzeugs, insbesondere eines Nutzfahrzeugs, und/oder eines Anhängers, wobei das Verfahren die folgenden Schritte aufweist:
Einlesen eines ersten Temperatursignals und zumindest eines zweiten Temperatursignals, wobei das erste Temperatursignal eine Temperatur der Bremse und/oder eines Funktionsteils der Bremse repräsentiert und wobei das zumindest zweite Temperatursignal zumindest eine weitere Temperatur zumindest einer weiteren Bremse des Fahrzeugs repräsentiert; und
Ermitteln eines Fehlerzustands der Bremse unter Verwendung des ersten Temperatursignals und des zweiten Temperatursignals, um ein Überhitzen der Bremse zu vermeiden,
**dadurch gekennzeichnet, dass**
bei Ermittlung einer in einem Toleranzbereich konstanten Erhöhung der Temperatur an Bremsbelägen der Bremse, insbesondere bei drehendem Rad, einmalig bei einer nachfolgenden betriebsbedingten Bremsung diese mit einem höheren Bremsdruck erfolgt, insbesondere bei gleichbleibender Bremsleistung des Fahrzeugs und/oder die Bremse bei stehendem Fahrzeug zumindest einmal betätigt wird.

2. Verfahren gemäß Anspruch 1, **dadurch gekennzeichnet, dass** die Bremse auf einer Achse angeordnet ist und die weitere Bremse auf der gleichen Achse oder auf einer weiteren Achse angeordnet ist.

3. Verfahren gemäß einem der vorhergehenden Ansprüche, **dadurch gekennzeichnet, dass** im Schritt des Ermittelns eine Temperaturdifferenz als eine Differenz zwischen dem Temperatursignal und dem weiteren Temperatursignal ermittelt wird, und der Fehlerzustand ermittelt wird, wenn die Temperaturdifferenz einen Differenz-Schwellwert überschreitet.

4. Verfahren gemäß einem der vorhergehenden Ansprüche, **dadurch gekennzeichnet, dass** im Schritt des Einlesens ein zusätzliches Temperatursignal eingelesen wird, das eine zusätzliche Temperatur einer zusätzlichen Bremse und/oder eines Funktionsteils der zusätzlichen Bremse repräsentiert, und dass im Schritt des Ermittelns der Fehlerzustand unter Verwendung des zusätzlichen Temperatursignals ermittelt wird.

5. Verfahren gemäß Anspruch 4, **dadurch gekennzeichnet, dass** im Schritt des Ermittelns die Temperaturdifferenz als Differenz zwischen dem Temperatursignal oder der Temperatur und einem Mittelwert der Temperatursignale oder der durch die Temperatursignale repräsentierten Temperaturen ermittelt wird, insbesondere wobei der Mittelwert als Median, getrimmter Mittelwert, arithmetisches Mittel und/oder Erwartungswert definiert ist.

6. Verfahren nach Anspruch 2, **dadurch gekennzeichnet, dass** bei einem Fehlerzustand und/oder bei Erkennung der konstant höheren Temperatur nach einer Bremsung ein akustisches und/oder optisches Signal ausgegeben wird.

7. Verfahren nach einem der vorhergehenden Ansprüche, **dadurch gekennzeichnet, dass** der ermittelte Fehlerzustand über ein Fahrtenbuch- oder Geolokalisationssystem an eine Werkstatt zur Bereitstellung eines Ersatzteils, oder Planung von einem Service-Intervall übermittelt wird.

8. Verfahren nach einem der vorhergehenden Ansprüche, **dadurch gekennzeichnet, dass** die Temperaturmessung unter Verwendung eines Polrads und/oder eines ABS-Sensors erfolgt.

9. Verfahren nach einem der vorhergehenden Ansprüche, **dadurch gekennzeichnet, dass** die Signalweitergabe drahtlos erfolgt.

10. Steuergerät (140, 170) zur Ausführung eines Verfahrens zum Vermeiden von Überhitzen einer Bremse eines Fahrzeugs, insbesondere eines Nutzfahrzeugs und/oder eines Anhängers, nach einem der vorhergehenden Ansprüche, wobei das Steuergerät (140, 170) die folgenden Einrichtungen aufweist:
eine Schnittstelle (144) zum Einlesen eines ersten Temperatursignals und zumindest eines zweiten Temperatursignals, wobei das erste Temperatursignal eine Temperatur der Bremse und/oder eines Funktionsteils der Bremse repräsentiert und wobei das zumindest zweite Temperatursignal zumindest eine weitere Temperatur zumindest einer weiteren Bremse des Fahrzeugs repräsentiert; und
eine Ermittlungseinrichtung (146) zum Ermitteln eines Fehlerzustands der Bremse unter Verwendung des ersten Temperatursignals und des zweiten Temperatursignals, um ein Überhitzen der Bremse zu vermeiden.

11. Bremse für ein Fahrzeug, insbesondere ein Nutzfahrzeug und/oder einen Anhänger, die ausgebildet ist, ein Temperatursignal bereitzustellen zum Vermeiden von Überhitzen der Bremse.

12. Bremssystem für ein Fahrzeug, insbesondere ein Nutzfahrzeug und/oder ein Anhänger, umfassend
ein Steuergerät gemäß Anspruch 10;
eine erste Bremse gemäß Anspruch 11 angeordnet auf einer Achse; und eine zweite Bremse gemäß Anspruch 11, die auf der Achse und/oder auf einer weiteren Achse angeordnet ist.

13. Fahrzeug, insbesondere ein Nutzfahrzeug und/oder ein Anhänger, mit einem Bremssystem gemäß Anspruch 12.

14. Computer-Programmprodukt mit Programmcode zur Durchführung des Verfahrens zum Vermeiden von Überhitzen einer Bremse eines Fahrzeugs (100) nach einem der Ansprüche 1 bis 9, wenn das Computer-Programmprodukt auf einem Steuergerät gemäß Anspruch 10 ausgeführt wird.

## Claims

1. Method for avoiding overheating of a brake of a vehicle, in particular a utility vehicle and/or a trailer, wherein the method has the following steps:
Reading-in of a first temperature signal and at least one second temperature signal, wherein the first temperature signal represents a temperature of the brake and/or of a functional component of the brake and wherein the at least second temperature signal represents at least a further temperature of at least a further brake of the vehicle; and
Determination of a fault condition of the brake using the first temperature signal and the second temperature signal, in order to avoid overheating of the brake,
**characterised in that**
on determining an elevation of the temperature of the brake lining of the brake, which elevation is constant within a tolerance range, in particular while the wheel is rotating, a braking operation is carried out with a higher braking pressure once during a subsequent operation-related braking operation, in particular when the braking performance of the vehicle is unchanged, and/or the brake is actuated at least once while the vehicle is stationary.

2. Method according to Claim 1, **characterised in that** the brake is fitted on an axle and the further brake is fitted on the same axle or on a further axle.

3. Method according to either of the preceding claims, **characterised in that** in the determination step, a temperature difference is determined as the difference between the temperature signal and the further temperature signal, and a fault condition is ascertained if the said temperature difference exceeds a difference threshold value.

4. Method according to any of the preceding claims, **characterised in that** in the reading-in step, an additional temperature signal is read in, which represents an additional temperature of an additional brake and/or of a functional component of the additional brake, and in the determination step the fault condition is ascertained using the additional temperature signal.

5. Method according to Claim 4, **characterised in that** in the determination step the temperature difference is determined as the difference between the temperature signals, or the temperature and a mean value of the temperature signals or of the temperatures represented by the temperature signals, in particular wherein the said mean value is defined as the median, a trimmed mean value, an arithmetical mean and/or an expected value.

6. Method according to Claim 2, **characterised in that** in the event of a fault condition and/or if the constant higher temperature is recognised after a braking operation, an acoustic and/or visual signal is emitted.

7. Method according to any of the preceding claims, **characterised in that** the fault condition determined is communicated by way of a logbook system or a geolocalisation system to a workshop, for the procurement of a replacement part or for the planning of a servicing interval.

8. Method according to any of the preceding claims, **characterised in that** the temperature is measured using a pole wheel and/or an ABS sensor.

9. Method according to any of the preceding claims, **characterised in that** signal transmission takes place by wireless means.

10. Control unit (140, 170) for a method for avoiding overheating of a brake of a vehicle, in particular a utility vehicle and/or a trailer, according to any of the preceding claims, wherein the control unit (140, 170) comprises the following devices:
an interface (144) for reading-in a first temperature signal and at least one second temperature signal, wherein the first temperature signal represents a temperature of the brake and/or of a functional component of the brake, and wherein the at least one second temperature signal represents at least one further temperature of at least one further brake of the vehicle; and
a determination device (146) for ascertaining a fault condition of the brake using the first temperature signal and the second temperature signal, in order to avoid overheating of the brake.

11. Brake for a vehicle, in particular a utility vehicle and/or a trailer, which is designed to emit a temperature signal in order to avoid overheating the brake.

12. Brake system for a vehicle, in particular a utility vehicle and/or a trailer, comprising:
a control unit according to Claim 10;
a first brake according to Claim 11 which is fitted on an axle; and
a second brake according to Claim 11, which is fitted on the said axle and/or on a further axle.

13. Vehicle, in particular a utility vehicle and/or a trailer, with a brake system according to Claim 12.

14. Computer program product with a program code for carrying out the method for avoiding overheating of a brake of a vehicle (100) according to any of Claims 1 to 9, when the computer program product is run on a control unit according to Claim 10.

## Revendications

1. Procédé pour empêcher la surchauffe d'un frein d'un véhicule, notamment d'un véhicule utilitaire et/ou d'une remorque, le procédé ayant les stades suivants :
entrée d'un premier signal de température et d'au moins un deuxième signal de température, le premier signal de température représentant une température du frein et/ou d'une partie fonctionnelle du frein et le au moins deuxième signal de température représentant au moins une autre température d'au moins un autre frein du véhicule et
détermination d'un état de défaut du frein en utilisant le premier signal de température et le deuxième signal de température afin d'empêcher une surchauffe du frein,
**caractérisé en ce que**,
lors de la détermination d'une élévation, constante dans une plage de tolérance, de la température de garniture du frein, notamment lorsqu'une roue tourne, un freinage, dû au fonctionnement, venant ensuite s'effectue une fois avec une pression de frein plus grande, notamment à puissance de freinage invariable du véhicule, et/ou on actionne au moins une fois le frein alors que le véhicule est à l'arrêt.

2. Procédé suivant la revendication 1, **caractérisé en ce que** le frein est monté sur un essieu et l'autre frein est monté sur le même essieu ou sur un autre essieu.

3. Procédé suivant l'une des revendications précédentes, **caractérisé en ce que**, dans le stade de la détermination, on détermine une différence de température comme différence entre le signal de température et l'autre signal de température et on détermine l'état de défaut si la différence de température dépasse une valeur de seuil de différence.

4. Procédé suivant l'une des revendications précédentes, **caractérisé en ce que**, dans le stade de l'entrée, on entre un signal de température supplémentaire, qui représente une température supplémentaire d'un frein supplémentaire et/ou d'une partie fonctionnelle du frein supplémentaire et **en ce que**, dans le stade de la détermination, on détermine l'état de défaut, en utilisant le signal de température supplémentaire.

5. Procédé suivant la revendication 4, **caractérisé en ce que**, dans le stade de la détermination, on détermine la différence de température comme différence entre le signal de température et/ou la température et une valeur moyenne des signaux de température ou des températures représentées par les signaux de température, notamment dans lequel la valeur moyenne est définie comme médiane, comme moyenne tronquée, comme moyenne arithmétique et/ou comme valeur escomptée.

6. Procédé suivant la revendication 2, **caractérisé en ce que**, s'il y a un état de défaut et/ou si l'on détecte la température plus haute d'une manière constante après un freinage, on émet un signal acoustique et/ou optique.

7. Procédé suivant l'une des revendications précédentes, **caractérisé en ce que** l'on transmet l'état de défaut déterminé par un système de livret de bord ou de géolocalisation à un atelier de mise à disposition d'une pièce de remplacement ou à la planification d'un intervalle d'entretien.

8. Procédé suivant l'une des revendications précédentes **caractérisé en ce que** la mesure de la température s'effectue en utilisant une roue polaire et/ou un capteur ABS.

9. Procédé suivant l'une des revendications précédentes **caractérisé en ce que** l'acheminement du signal s'effectue sans fil.

10. Appareil (140,170) de commande pour effectuer un procédé afin d'empêcher la surchauffe d'un frein d'un véhicule, notamment d'un véhicule utilitaire et/ou d'une remorque, suivant l'une des revendications précédentes, dans lequel l'appareil (140, 170) de commande a les dispositifs suivants :
une interface (144) pour l'entrée d'un premier signal de température et d'au moins un deuxième signal de température, le premier signal de température représentant une température du frein et/ou d'une partie fonctionnelle du frein et le au moins deuxième signal de température représentant au moins une autre température d'au moins un autre frein du véhicule ; et
un dispositif (146) de détermination pour déterminer un état de défaut du frein, en utilisant le premier signal de température et le deuxième signal de température, afin d'empêcher une surchauffe du frein.

11. Frein d'un véhicule, notamment d'un véhicule utilitaire et/ou d'une remorque, qui est constitué pour mettre à disposition un signal de température, afin d'empêcher la surchauffe du frein.

12. Système de frein d'un véhicule, notamment d'un véhicule, utilitaire et/ou d'une remorque, comprenant ;
un appareil de commande suivant la revendication 10 ;
un premier frein suivant la revendication 11, qui est monté sur un essieu , et un deuxième frein suivant la revendication 11, qui est monté sur l'essieu et/ou sur un autre essieu.

13. Véhicule, notamment véhicule utilitaire et/ou remorque, ayant un système de frein suivant la revendication 12.

14. Produit de programme d'ordinateur, ayant des codes de programme pour effectuer le procédé pour empêcher la surchauffe d'un frein d'un véhicule (100) suivant l'une des revendications 1 à 9, lorsque le produit de programme d'ordinateur est réalisé sur un appareil de commande suivant la revendications 10.
